# EUROPÄISCHE PATENTANMELDUNG

(11) **EP 3 869 347 A1**
(43) Veröffentlichungstag der Anmeldung: **25.08.2021**
(21) Anmeldenummer: 21158247.3
(22) Anmeldetag: 19.02.2021
(51) Int. Cl.: G06F 13/38, G06F 15/78

(54) **COMPUTERSYSTEM SOWIE VERFAHREN ZUM BETREIBEN EINES COMPUTERSYSTEMS**

(30) Priorität: 21.02.2020 DE 102020104585
(71) Anmelder: Heitec AG, 90542 Eckental (DE)
(72) Erfinder: Jäger, Alexander, 91052 Erlangen (DE); Körber, Werner, 91052 Erlangen (DE)
(74) Vertreter: Prinz & Partner mbB

(57) **Zusammenfassung**

Ein Computersystem mit einem Rechenmodul (32), einem Kommunikationsmodul (34) und wenigstens einer I/O-Schnittstelle (16) ist beschrieben. Das Rechenmodul umfasst ein COM Express Modul (44) und/oder ein COM HPC Modul. Das Kommunikationsmodul (34) umfasst ein SMARC Modul (48) und/oder ein Qseven Modul. Das Kommunikationsmodul (34) weist ein FPGA-Modul (50) auf, das signalübertragend mit dem Rechenmodul (32) und mit der wenigstens einen I/O-Schnittstelle (16) verbunden ist. Das FPGA-Modul (50) ist dazu eingerichtet, basierend auf wenigstens einem ersten Kommunikationsstandard mit dem Rechenmodul (32) zu kommunizieren und basierend auf wenigstens einem zweiten Kommunikationsstandard mit der wenigstens einen I/O-Schnittstelle (16) zu kommunizieren. Das FPGA-Modul (50) ist dazu eingerichtet, Signale vom wenigstens einen ersten Kommunikationsstandard zum wenigstens einen zweiten Kommunikationsstandard zu konvertieren und umgekehrt. Das Rechenmodul (32) ist als Host und das Kommunikationsmodul (34) als Client eingerichtet. Ferner ist ein Verfahren zum Betreiben eines Computersystems (10) beschrieben.

## Beschreibung

Die Erfindung betrifft ein Computersystem sowie ein Verfahren zum Betreiben eines Computersystems.

In vielen Bereichen der Industrie, des Gewerbes und im Personenverkehr werden eingebettete Computersysteme verwendet, welche im Englischen auch als "embedded systems" bezeichnet werden.

Diese Computersysteme sind üblicherweise speziell auf eine bestimmte Anwendung zugeschnitten und umfassen die für diese spezielle Anwendung notwendigen Komponenten und Schnittstellen.

Dies ist einerseits vorteilhaft, da die Rechnerleistung, die Speicherkapazitäten und die Schnittstellen genau auf die gewünschte Anwendung zugeschnitten sind, wodurch überschüssige Rechenressourcen vermieden und Kosten eingespart werden können.

Andererseits weisen aus dem Stand der Technik bekannte eingebettete Computersysteme den Nachteil auf, dass sie kaum oder sogar gar nicht nachrüstbar sind, wenn sich die Anforderungen an die Rechenleistung und/oder die Schnittstellen verändern.

Aufgabe der Erfindung ist es daher, ein Computersystem bereitzustellen, das eine einfachere Nachrüstung und/oder Umrüstung von Komponenten erlaubt.

Die Aufgabe wird erfindungsgemäß gelöst durch ein Computersystem, mit einem Rechenmodul, einem Kommunikationsmodul und wenigstens einer I/O-Schnittstelle. Das Rechenmodul umfasst ein COM Express Modul und/oder ein COM HPC Modul. Das Kommunikationsmodul umfasst ein SMARC Modul und/oder ein Qseven Modul. Das Kommunikationsmodul weist ein FPGA-Modul auf, das signalübertragend mit dem Rechenmodul und mit der wenigstens einen I/O-Schnittstelle verbunden ist. Das FPGA-Modul ist dazu eingerichtet, basierend auf wenigstens einem ersten Kommunikationsstandard mit dem Rechenmodul zu kommunizieren und basierend auf wenigstens einem zweiten Kommunikationsstandard mit der wenigstens einen I/O-Schnittstelle zu kommunizieren. Das FPGA-Modul ist dazu eingerichtet, Signale vom wenigstens einen ersten Kommunikationsstandard zum wenigstens einen zweiten Kommunikationsstandard zu konvertieren und umgekehrt.

Das erfindungsgemäße Computersystem basiert auf dem Gedanken, die Vorteile des COM Express bzw. des COM HPC Standards einerseits und die Vorteile des SMARC bzw. des Qseven Standards andererseits miteinander zu kombinieren.

So zeichnet sich das Rechenmodul aufgrund des COM Express bzw. COM HPC Standards durch eine einfache Nachrüstbarkeit der Rechen- und Speicherkomponenten, insbesondere von CPUs, GPUs und/oder Arbeitsspeicher aus.

Demgegenüber zeichnet sich das Kommunikationsmodul durch eine hohe Flexibilität sowie durch einen geringen Stromverbrauch aus. Die hohe Flexibilität ist dabei unter anderem auf die große Zahl von standardmäßig unbelegten und daher frei belegbaren Pins von SMARC- bzw. Qseven-Boards zurückzuführen. Anders ausgedrückt stehen also noch viele freie Pins zur Kommunikation mit den I/O-Schnittstellen und dem Rechenmodul zur Verfügung.

Dabei sorgt das Kommunikationsmodul, genauer gesagt das FPGA-Modul dafür, dass die Kommunikation zwischen dem Rechenmodul und der wenigstens einen I/O-Schnittstelle funktioniert, indem es Signale zwischen dem wenigstens einen ersten Kommunikationsstandard und dem wenigstens einen zweiten Kommunikationsstandard konvertiert.

Das Kommunikationsmodul ist dabei als Client eingerichtet, wird also vom Rechenmodul gesteuert und überwacht.

Dementsprechend kann das gesamte Computersystem ganz einfach an einen neuen Satz von I/O-Schnittstellen angepasst werden, indem das FPGA-Modul einfach neu programmiert wird.

Zusammenfassend bietet das erfindungsgemäße Computersystem also eine einfache Nachrüstbarkeit der Rechenkomponenten und erlaubt auch einen nachträglichen Austausch und/oder die Ergänzung von I/O-Schnittstellen. Das erfindungsgemäße Computersystem ist also in der Rechenleistung skalierbar, insbesondere auch noch nachträglich skalierbar. Außerdem erlaubt das erfindungsgemäße Computersystem eine Anpassung der I/O-Schnittstellen an kundenspezifische Anforderungen.

Es sei darauf hingewiesen, dass im Rahmen dieser Patentanmeldung aus Gründen der Lesbarkeit zu den einzelnen Standards jeweils nur die Oberbegriffe genannt werden. Damit sind jedoch stillschweigend auch stets alle geeigneten Varianten des jeweiligen Standards gemeint. Beispielsweise sind unter dem Begriff "COM Express" die Varianten COM Express 1, 2, 3 etc. zusammengefasst. Insbesondere ist auch COM Express 3.0 umfasst.

Gleiches gilt für den Begriff "SMARC", der insbesondere SMARC 2.0 einschließt, sowie für die Begriffe "COM HPC" und "Qseven"

Ein Aspekt der Erfindung sieht vor, dass das Rechenmodul und das Kommunikationsmodul jeweils auf einem separaten Baseboard vorgesehen sind oder dass das Rechenmodul und das Kommunikationsmodul auf einem gemeinsamen Baseboard vorgesehen sind. Sind das Rechenmodul und das Kommunikationsmodul auf einem gemeinsamen Baseboard vorgesehen, so ergibt sich ein Computersystem, das besonders kompakt ist, insbesondere besonders wenig Bauraum beansprucht. Sind hingegen das Rechenmodul und das Kommunikationsmodul auf verschiedenen Baseboards vorgesehen, so können die einzelnen Komponenten besonders leicht ausgetauscht werden.

Vorzugsweise umfasst der wenigstens eine erste Kommunikationsstandard PCI, PCI Express, SPI und/oder USB. Es sei darauf hingewiesen, dass damit wie auch schon oben angedeutet sämtliche Versionen dieser Standards gemeint sind. Vorzugsweise umfasst der wenigstens eine erste Kommunikationsstandard zumindest PCI Express, da dieser Standard eine besonders hohe Datenrate erlaubt, wobei sich die einzelnen beteiligten Komponenten gegenseitig nicht stören.

Weiter bevorzugt weist das Rechenmodul einen ersten Referenzoszillator auf, der dazu ausgebildet ist, ein erstes Referenztaktsignal für das Rechenmodul zu generieren, und das Kommunikationsmodul weist einen zweiten Referenzoszillator auf, der dazu ausgebildet ist, ein zweites Referenztaktsignal für das Kommunikationsmodul zu generieren. Das Rechenmodul und das Kommunikationsmodul erzeugen also jeweils ein eigenes Taktsignal, auf dem basierend sie jeweils Daten verarbeiten. Diese Konfiguration ermöglicht eine fehlerfreie Kommunikation zwischen dem Rechenmodul und dem Kommunikationsmodul mittels PCI Express.

Insbesondere wird also kein separates Taktsignal zwischen dem Rechenmodul und dem Kommunikationsmodul übertragen. Die Taktleitungen des Rechenmoduls und des Kommunikationsmoduls sind also vollständig voneinander getrennt.

Gemäß einer Ausgestaltung der Erfindung ist der wenigstens eine zweite Kommunikationsstandard dazu eingerichtet, Kommunikation mit einer m.2-Schnittstelle, einer Ethernet-Schnittstelle, einer RS232-Schnittstelle, einer RS422-Schnittstelle, einer RS485-Schnittstelle, einem binären Ein/-Ausgang, einem Odometer, einer UART-Schnittstelle, einer CAN-Schnittstelle und/oder einer EtherCAT-Schnittstelle zu ermöglichen und/oder basierend auf I2C zu kommunizieren. Die Auflistung dieser Schnittstellen ist als rein beispielhaft anzusehen. Natürlich kann der wenigstens eine zweite Kommunikationsstandard auch dazu eingerichtet sein, mit anderen als den genannten Schnittstellen und/oder basierend auf eine, anderen Bus-System als I2C zu kommunizieren.

Gemäß einem weiteren Aspekt der Erfindung sind wenigstens zwei I/O-Schnittstellen vorgesehen, die basierend auf unterschiedlichen zweiten Kommunikationsstandards mit dem FPGA-Modul kommunizieren. Dementsprechend ist das FPGA-Modul dann dazu eingerichtet, Signale vom wenigstens einen ersten Kommunikationsstandard zu den unterschiedlichen zweiten Kommunikationsstandards zu konvertieren und umgekehrt.

Denkbar ist, dass das FPGA-Modul ein separates FPGA pro I/O-Schnittstelle aufweist.

Selbstverständlich kann auch ein FPGA für mehrere I/O-Schnittstellen vorgesehen sein oder das FPGA-Modul nur ein FPGA für alle I/O-Schnittstellen umfassen.

Natürlich kann das FPGA-Modul auch dazu eingerichtet sein, basierend auf wenigstens zwei unterschiedlichen ersten Kommunikationsstandards mit dem Rechenmodul zu kommunizieren. Das FPGA-Modul ist dann dazu eingerichtet, Signale vom wenigstens einen zweiten Kommunikationsstandard zu den unterschiedlichen ersten Kommunikationsstandard zu konvertieren und umgekehrt.

Insbesondere weist das Rechenmodul einen x86-Prozessor auf. Dementsprechend weist das Rechenmodul eine große Rechenleistung auf und kann große Datenmengen schnell verarbeiten.

Gemäß einer Ausgestaltung der Erfindung weist das Kommunikationsmodul einen ARM- und/oder x86-Prozessor auf, insbesondere wobei der Prozessor mit einer Ethernet-Schnittstelle und/oder mit einer USB-Schnittstelle verbunden ist. Der ARM-Prozessor weist einen geringen Energieverbrauch auf, da er komponentenweise abschaltbar ist. Dementsprechend kann der ARM-Prozessor im Bedarfsfall flexibel zugeschaltet werden, wenn es die Umstände erfordern. Demgegenüber bietet der x86-Prozessor verglichen mit dem ARM-Prozessor eine höhere Rechenleistung, was besonders dann von Vorteil ist, wenn der Prozessor einen Großteil der Zeit in Betrieb ist.

Das Computersystem kann wenigstens ein Drahtlosmodul aufweisen, das dazu eingerichtet ist, drahtlos zu kommunizieren, wobei das Rechenmodul mit dem wenigstens einem Drahtlosmodul signalübertragend verbunden ist, insbesondere unmittelbar verbunden. Bei den Drahtlosmodulen handelt es sich insbesondere um ein WLAN-Modul, ein Mobilfunkmodul, ein LPWA-Modul, ein GPS-Modul, ein GSM-Modul, ein LTE-Modul etc.

Unter dem Begriff "unmittelbar verbunden" ist dabei zu verstehen, dass das Rechenmodul direkt über entsprechende Leitungen mit dem wenigstens einen Drahtlosmodul verbunden ist, und nicht über das Kommunikationsmodul.

Ein weiterer Aspekt der Erfindung sieht vor, dass das Computersystem wenigstens einen Datenspeicher aufweist, wobei das Rechenmodul mit dem wenigstens einen Datenspeicher verbunden ist, insbesondere unmittelbar verbunden ist. Insbesondere ist das Rechenmodul mit dem wenigstens einen Datenspeicher mittels SATA, SD Bus und/oder NVM Express verbunden.

Unter dem Begriff "unmittelbar verbunden" ist dabei zu verstehen, dass das Rechenmodul direkt über entsprechende Leitungen mit dem wenigstens einen Datenspeicher verbunden ist, und nicht über das Kommunikationsmodul.

Vorzugsweise sind bzw. ist das Rechenmodul und/oder das Kommunikationsmodul wärmeleitend mit einem Gehäuse des Computersystems verbunden. Dadurch ist gewährleistet, dass Wärme vom Rechenmodul und vom Kommunikationsmodul, insbesondere von auf diesen Modulen verbauten Prozessoren über das Gehäuse nach außen abgeleitet wird.

Außerdem ist dadurch gewährleistet, dass das Rechenmodul und das Kommunikationsmodul dieselbe oder zumindest eine ähnliche Temperatur aufweisen, sodass interne Referenzoszillatoren des Rechenmoduls und des Kommunikationsmoduls denselben thermalen Drift erfahren. Dementsprechend kommt es nicht zu Frequenzversätzen der internen Referenzoszillatoren, die durch Temperaturunterschiede bedingt sein können.

Gemäß einem weiteren Aspekt der Erfindung ist das Rechenmodul als Host und das Kommunikationsmodul als Client eingerichtet. Anders ausgedrückt steuert und überwacht das Rechenmodul das restliche Computersystem, insbesondere das Kommunikationsmodul.

Die Aufgabe wird ferner erfindungsgemäß gelöst durch ein Verfahren zum Betreiben eines Computersystems, insbesondere eines oben beschriebenen Computersystems. Das Computersystem weist ein Rechenmodul, ein Kommunikationsmodul und wenigstens eine I/O-Schnittstelle auf. Das Rechenmodul umfasst ein COM Express Modul und/oder ein COM HPC Modul. Das Kommunikationsmodul umfasst ein SMARC Modul und/oder ein Qseven Modul. Das Kommunikationsmodul weist ein FPGA-Modul auf, das signalübertragend mit dem Rechenmodul und mit der wenigstens einen I/O-Schnittstelle verbunden ist. Das FPGA-Modul ist dazu eingerichtet, basierend auf wenigstens einem ersten Kommunikationsstandard mit dem Rechenmodul zu kommunizieren und basierend auf wenigstens einem zweiten Kommunikationsstandard mit der wenigstens einen I/O-Schnittstelle zu kommunizieren, insbesondere wobei das Rechenmodul als Host und das Kommunikationsmodul als Client eingerichtet ist. Das Verfahren umfasst die folgenden Schritte:
- Generieren von wenigstens einem Datensignal mittels des Rechenmoduls basierend auf dem wenigstens einen ersten Kommunikationsstandard und/oder Empfangen von wenigstens einem Datensignal mittels der wenigstens einen I/O-Schnittstelle basierend auf dem wenigstens einen zweiten Kommunikationsstandard;
- Übertragen des wenigstens einen Datensignals an das Kommunikationsmodul; und
- Konvertieren des Datensignals vom wenigstens einen ersten Kommunikationsstandard zum wenigstens einen zweiten Kommunikationsstandard bzw. vom wenigstens einen zweiten Kommunikationsstandard zum wenigstens einen ersten Kommunikationsstandard mittels des FPGA-Moduls, wodurch ein konvertiertes Datensignal erzeugt wird.

Dementsprechend wird gemäß einer ersten Möglichkeit das Datensignal vom Rechenmodul generiert und basierend auf dem wenigstens einen ersten Kommunikationsstandard an das Kommunikationsmodul übertragen. Das Datensignal wird dann vom FPGA-Modul zum wenigstens einen zweiten Kommunikationsstandard konvertiert.

Gemäß einer zweiten Möglichkeit wird das Datensignal über die wenigstens eine I/O-Schnittstelle empfangen und basierend auf dem wenigstens einen zweiten Kommunikationsstandard an das Kommunikationsmodul übertragen. Das Datensignal wird dann vom FPGA-Modul zum wenigstens einen ersten Kommunikationsstandard konvertiert.

Hinsichtlich der Vorteile und Eigenschaften des Verfahrens zum Betreiben des Computersystems wird auf die obigen Erläuterungen bezüglich des Computersystems verwiesen, welche ebenso für das Verfahren gelten und umgekehrt.

Vorzugsweise wird das konvertierte Datensignal zur wenigstens einen I/O-Schnittstelle bzw. zum Rechenmodul übertragen. Nachdem das Datensignal konvertiert wurde, wird es also zur Weiterverarbeitung an das Rechenmodul übertragen, wenn das ursprüngliche Datensignal über die wenigstens eine I/O-Schnittstelle empfangen wurde. Wenn das Datensignal vom Rechenmodul generiert wurde, so wird das konvertierte Datensignal zur Ausgabe an die wenigstens eine I/O-Schnittstelle übertragen, insbesondere nur zu einer oder mehreren bestimmten I/O-Schnittstellen, für die das Datensignal bestimmt ist.

Ein Aspekt der Erfindung sieht vor, dass das Datensignal zwischen dem Rechenmodul und dem Kommunikationsmodul mittels PCI Express übertragen wird. Dieser Standard erlaubt den Austausch von Daten mit einer besonders hohen Datenrate, wobei sich die einzelnen beteiligten Komponenten gegenseitig nicht stören.

Vorzugsweise erzeugen das Rechenmodul und das Kommunikationsmodul jeweils ein eigenes Referenztaktsignal, auf dem basierend sie jeweils Daten verarbeiten. Diese Konfiguration ermöglicht eine fehlerfreie Kommunikation zwischen dem Rechenmodul und dem Kommunikationsmodul mittels PCI Express.

Gemäß einer Ausgestaltung der Erfindung wird kein separates Taktsignal zwischen dem Rechenmodul und dem Kommunikationsmodul übertragen. Die Taktleitungen des Rechenmoduls und des Kommunikationsmoduls sind also vollständig voneinander getrennt.

Weitere Vorteile und Eigenschaften der Erfindung ergeben sich aus der nachfolgenden Beschreibung sowie den beigefügten Zeichnungen, auf die Bezug genommen wird. In diesen zeigen:
- Fig. 1 eine Schrägansicht eines erfindungsgemäßen Computersystems;
- Fig. 2 schematisch ein Blockdiagramm des erfindungsgemäßen Computersystems von Figur 1;
- Fig. 3 schematisch ein weiteres Blockdiagramm des erfindungsgemäßen Computersystems von Figur 1;
- Fig. 4 ein Blockdiagramm eines Rechenmoduls und eines Kommunikationsmoduls des erfindungsgemäßen Computersystems von Figur 1;
- Fig. 5 ein Ablaufdiagramm eines erfindungsgemäßen Verfahrens zum Betreiben eines Computersystems;
- Fig. 6 ein weiteres Ablaufdiagramm eines erfindungsgemäßen Verfahrens zum Betreiben eines Computersystems; und
- Fig. 7 ein Querschnitt durch das erfindungsgemäße Computersystem von Figur 1.

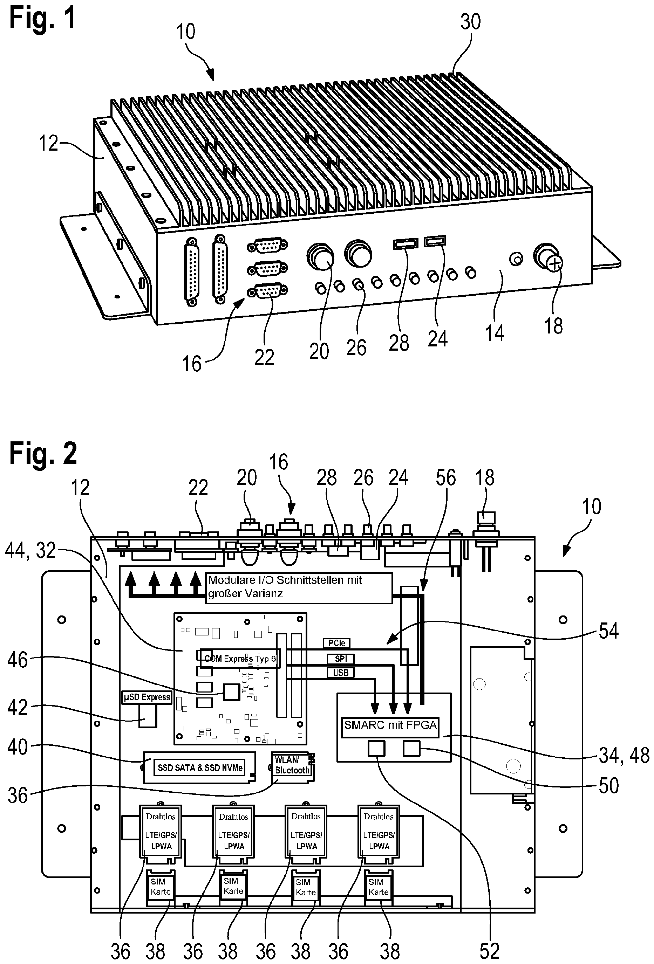

In Figur 1 ist schematisch ein Computersystem 10 gezeigt. Allgemein ausgedrückt handelt es sich bei dem Computersystem 10 um ein eingebettetes System, was im Englischen auch als "embedded system" bezeichnet wird.

Das Computersystem 10 wird beispielsweise in der Industrie, im Gewerbe, im Personenverkehr, insbesondere in Zügen, und/oder in medizinischen Anwendungen eingesetzt.

Insbesondere erfüllt das Computersystem die EN50155, ist also zum Einsatz in Bahnfahrzeugen geeignet.

Das Computersystem 10 hat ein Gehäuse 12, welches die elektronischen Komponenten des Computersystems 10 vollständig umgibt.

Das Gehäuse hat eine Stirnseite 14, an dem mehrere I/O-Schnittstellen 16 sowie ein Stromanschlussstecker 18 vorgesehen sind.

In dem in Figur 1 gezeigten Beispiel umfassen die I/O-Schnittstellen 16 unter anderem Ethernet-Schnittstellen 20, RS232-, RS422- und/oder RS485-Schnittstellen 22, eine USB-Schnittstelle 24, Antennenanschlüsse 26 sowie eine DisplayPort-Schnittstelle 28.

Es sei jedoch darauf hingewiesen, dass die in Figur 1 gezeigte Konfiguration von I/O-Schnittstellen 16 rein beispielhaft ist. Insbesondere können die I/O-Schnittstellen 16 je nach Kundenanforderung bzw. je nach Einsatzgebiet des Computersystems 10 variieren und genau darauf zugeschnitten sein.

Optional können an einer weiteren Seite des Gehäuses 12, insbesondere an einer Oberseite, Kühlrippen 30 angeordnet sein, welche den Wärmeaustausch zwischen dem Computersystem 10 und der Umgebung verbessern.

Figur 2 zeigt schematisch einen Querschnitt durch das Computersystem 10, wobei die einzelnen Komponenten innerhalb des Gehäuses 12 in Form eines Blockdiagramms dargestellt sind.

Das Computersystem weist ein Rechenmodul 32, ein Kommunikationsmodul 34, mehrere Drahtlosmodule 36, SIM-Module 38 sowie einen ersten Datenspeicher 40 und einen zweiten Datenspeicher 42 auf.

Die SIM-Module 38 sind dabei jeweils wenigstens einem der Drahtlosmodule 36 zugeordnet. Die SIM-Module 38 können jeweils eine SIM-Karte aufnehmen, um das Computersystem 10 für Mobilfunk und/oder GPS eindeutig zu identifizieren.

Das Rechenmodul 32 umfasst in dem in Figur 2 gezeigten Ausführungsbeispiel ein COM Express Modul 44 mit einem x86-Prozessor 46.

Alternativ oder zusätzlich kann das Rechenmodul 32 auch ein COM HPC Modul umfassen.

Das Kommunikationsmodul 34 umfasst ein SMARC Modul 48 mit einem FPGA-Modul 50.

Das FPGA-Modul 50 umfasst ein oder mehrere FPGAs, die mit den I/O-Schnittstellen 16 verbunden sind.

Optional kann das Kommunikationsmodul 34 einen auf ARM oder x86 basierenden Prozessor 52 aufweisen, der mit weiteren USB-Schnittstellen und/oder Ethernet-Schnittstellen verbunden sein kann.

Es können auch mehrere Prozessoren auf dem Kommunikationsmodul 34 vorgesehen sein, die jeweils auf ARM oder x86 basieren.

Alternativ oder zusätzlich kann das Kommunikationsmodul 34 auch ein Qseven Modul umfassen.

In dem in Figur 2 gezeigten Ausführungsbeispiel sind das Rechenmodul 32 und das Kommunikationsmoduls 34 jeweils auf einem eigenen Baseboard angeordnet. Alternativ können das Rechenmodul 32 und das Kommunikationsmodul 34 jedoch auch auf einem gemeinsamen Baseboard angeordnet sein.

In beiden Fällen sind jedoch das Rechenmodul 32 und das Kommunikationsmodul 34 wärmeleitend mit dem Gehäuse 12 verbunden, sodass überschüssige Wärme abgeführt wird. Insbesondere werden dadurch das Rechenmodul 32 und das Kommunikationsmodul 34 auf gleicher Temperatur gehalten.

Das Rechenmodul 32 und das Kommunikationsmodul 34 sind signalübertragend miteinander verbunden, was in Figur 2 durch die Pfeile 54 angedeutet ist.

Das Rechenmodul 32 und das Kommunikationsmodul 34 sind dazu eingerichtet, basierend auf wenigstens einem ersten Kommunikationsstandard miteinander zu kommunizieren.

Dementsprechend werde Datensignale zwischen dem Rechenmodul 32 und dem Kommunikationsmodul 34 basierend auf dem wenigstens einen ersten Kommunikationsstandard übertragen. Genauer gesagt werden die Datensignale zwischen dem Rechenmodul 32 und dem FPGA-Modul 50 basierend auf dem wenigstens einen ersten Kommunikationsstandard übertragen.

Der wenigstens eine erste Kommunikationsstandard umfasst PCI Express, SPI und/oder USB.

Alternativ oder zusätzlich kann der wenigstens eine erste Kommunikationsstandard auch weitere geeignete Standards umfassen.

Das Kommunikationsmodul 34 ist wiederum mit den I/O-Schnittstellen 16 signalübertragend verbunden, was in Figur 2 durch die Pfeile 56 dargestellt ist.

Das Kommunikationsmodul 34 ist dazu eingerichtet, mit den I/O-Schnittstellen 16 basierend auf wenigstens einem zweiten Kommunikationsstandard zu kommunizieren.

Dementsprechend werden Datensignale zwischen dem Kommunikationsmodul und den I/O-Schnittstellen 16 basierend auf dem wenigstens einen zweiten Kommunikationsstandard übertragen. Genauer gesagt werden die Datensignale zwischen dem FPGA-Modul 50 und den I/O-Schnittstellen 16 basierend auf dem wenigstens einen zweiten Kommunikationsstandard übertragen.

Der wenigstens eine zweite Kommunikationsstandard ist dazu eingerichtet, die Kommunikation des FPGA-Moduls 50 mit den spezifischen I/O-Schnittstellen 16 des Computersystems 10 zu ermöglichen.

Da das Computersystem 10 verschiedene I/O-Schnittstellen 16 aufweist, ist das FPGA-Modul 50 dazu eingerichtet, basierend auf dem jeweils passenden zweiten Kommunikationsstandard mit der jeweiligen I/O-Schnittstelle 16 zu kommunizieren.

Insbesondere ermöglicht der wenigstens eine zweite Kommunikationsstandard in dem in Figur 2 gezeigten Ausführungsbeispiel die Kommunikation zwischen dem FPGA-Modul 50 und den Ethernet-Schnittstellen 20, den RS232/RS422/RS485-Schnittstellen 22, den USB-Schnittstelle 24, den Antennen-Anschlüsse 26 sowie der DisplayPort-Schnittstelle 28.

Das FPGA-Modul 50 ist also dazu eingerichtet, basierend auf dem wenigstens einen ersten Kommunikationsstandard mit dem Rechenmodul 32 und basierend auf dem wenigstens einen zweiten Kommunikationsstandard mit den I/O-Schnittstellen 16 zu kommunizieren.

Um eine Kommunikation des Rechenmodul 32 den I/O-Schnittstellen 16 zu ermöglichen, ist das FPGA-Modul 50 dazu eingerichtet, Signale vom wenigstens einen ersten Kommunikationsstandard zum wenigstens einen zweiten Kommunikationsstandard zu konvertieren und umgekehrt.

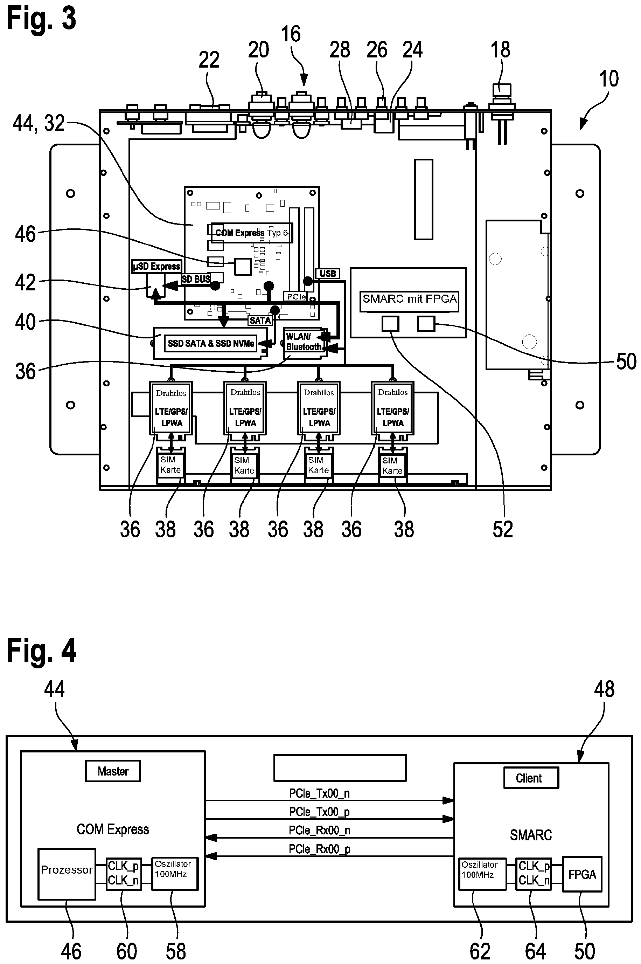

In Figur 3 sind die signalübertragenden Verbindungen zwischen dem Rechenmodul 32 einerseits und den Drahtlosmodulen 36, dem ersten Datenspeicher 40 und dem zweiten Datenspeicher 42 andererseits dargestellt.

In dem dort gezeigten Ausführungsbeispiel sind die Drahtlosmodule 36 mit dem Rechenmodul 32 mittels USB und/oder PCI Express verbunden.

Der erste Datenspeicher 40 ist mit dem Rechenmodul 32 mittels SATA und/oder PCI Express verbunden.

Der zweite Datenspeicher 42 ist mit dem Rechenmodul 32 mittels SD Bus und/oder PCI Express verbunden.

In Figur 4 ist die Konfiguration der PCI Express Verbindung zwischen dem Rechenmodul 32 und dem Kommunikationsmodul 34 illustriert.

Das Rechenmodul 32, genauer gesagt das COM Express Modul 44 ist als Host eingerichtet, während das Kommunikationsmoduls 34, genauer gesagt das SMARC Modul als Client eingerichtet ist. Anders ausgedrückt kann das Rechenmodul 32 das Kommunikationsmodul 34 steuern.

Gleiches gilt auch, wenn das Rechenmodul 32 ein COM HPC Modul umfasst und/oder falls das Kommunikationsmodul 34 ein Qseven Modul umfasst.

Um diese Konfiguration, also COM Express Modul 44 als Host und SMARC Modul 48 als Client, zu ermöglichen, ist die PCI Express Verbindung wie im Folgenden beschrieben konfiguriert.

Das Rechenmodul 32 weist einen ersten Referenzoszillator 58 auf, der dazu ausgebildet ist, ein erstes Referenztaktsignal 60 für das Rechenmodul 32, genauer gesagt für den x86 Prozessor 46 zu generieren.

Das Kommunikationsmodul 34 weist einen zweiten Referenzoszillator 62 auf, der dazu ausgebildet ist, ein zweites Referenztaktsignal 64 für das Kommunikationsmodul 34, genauer gesagt für das FPGA-Modul 50 zu generieren.

Das Rechenmodul 32 und das Kommunikationsmoduls 34 weisen also voneinander getrennte Taktsignalpfade auf. Dementsprechend wird, zumindest für die PCI Express Verbindung, kein separates Taktsignal zwischen dem Rechenmodul 32 und dem Kommunikationsmodul 34 übertragen.

Die Frequenzen des ersten Referenztaktsignals 60 und des zweiten Referenztaktsignals 64 sind dabei gleich. Unter "gleich" ist dabei zu verstehen, dass die Frequenz der Referenztaktsignale 60, 64 jeweils maximal um ±300 ppm von einer vordefinierten Taktfrequenz abweicht, wie auch im PCI Express Standard definiert ist.

In dem in Figur 4 gezeigten Beispiel ist die Frequenz des ersten Referenzoszillator 58 und des zweiten Referenzoszillator 62 jeweils gleich 100 MHz.

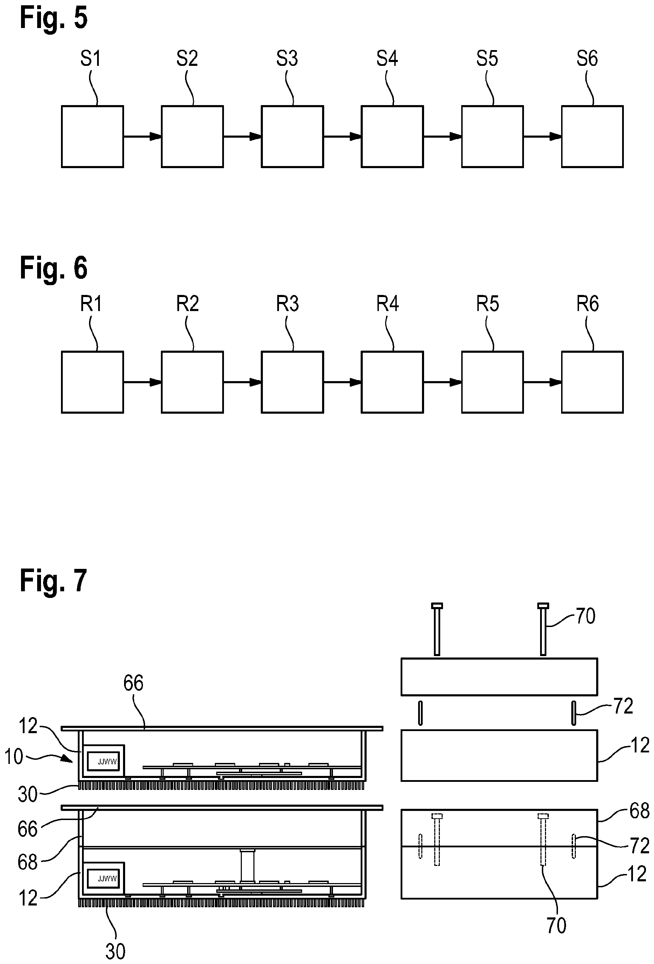

Das Computersystem 10 ist dazu ausgebildet, das im Folgenden anhand der Figuren 5 beschriebene Verfahren durchzuführen.

Zunächst empfängt das Rechenmodul 32 ein Datensignal von wenigstens einem der Drahtlosmodule 36, vom ersten Datenspeicher 40 und/oder vom zweiten Datenspeicher 42 (Schritt S1).

Das Datensignal wird vom x86 Prozessor 46 basierend auf dem ersten Referenztaktsignal 60 verarbeitet, wodurch ein verarbeitetes Datensignal generiert wird (Schritt S2).

Das verarbeitete Datensignal wird dann basierend auf dem wenigstens einen ersten Kommunikationsstandard an das Kommunikationsmodul 34, genauer gesagt an das FPGA-Modul 50 übertragen (Schritt S3).

Wie oben bereits erläutert wird kein separates Taktsignal zwischen dem Rechenmodul 32 und dem Kommunikationsmodul 34 übertragen. Daher führt das Kommunikationsmodul 34, genauer gesagt das FPGA-Modul 50 eine Taktrückgewinnung durch, um das Datensignal weiter zu verarbeiten (Schritt S4).

Bei der Taktrückgewinnung wird basierend auf dem Datensignal der Takt, also die Symbolrate des Datensignals ermittelt. Die Symbolrate kann dabei durchaus verschieden von der Frequenz des ersten Referenztaktsignals 60 und/oder von der Frequenz des zweiten Referenztaktsignals 64 sein.

Das FPGA-Modul 50 konvertiert das erhaltene Datensignal basierend auf dem zweiten Referenztaktsignal 64 vom wenigstens einen ersten Kommunikationsstandard zum wenigstens einen zweiten Kommunikationsstandard, wodurch ein konvertiertes Datensignal generiert wird (Schritt S5).

Genauer gesagt konvertiert das FPGA-Modul 50 das erhaltene Datensignal zu demjenigen zweiten Kommunikationsstandard, der mit derjenigen I/O-Schnittstelle 16 verknüpft ist, zu der das Datensignal übertragen werden soll.

Das konvertierte Datensignal wird dann an diejenige der I/O-Schnittstellen 16 übertragen, für die das Datensignal bestimmt ist (Schritt S6). Diese Information kann beispielsweise Teil des Datensignals sein.

Über die I/O-Schnittstellen 16 kann das Datensignal dann an weitere, externe Geräte übertragen werden.

Das oben beschriebene Verfahren entspricht einem Signalpfad, der von den Drahtlosmodulen 36, dem ersten Datenspeicher 40 und/oder dem zweiten Datenspeicher 42 über das Rechenmodul 32 und das Kommunikationsmodul 34 hin zu den I/O-Schnittstellen 16 führt.

Natürlich kann das Computersystem 10 jedoch auch Signale über die I/O-Schnittstellen 16 empfangen und verarbeiten, was im Folgenden anhand der Figur 6 beschrieben wird.

Zunächst wird mittels der I/O-Schnittstellen 16 ein Datensignal empfangen und basierend auf dem wenigstens einen zweiten Kommunikationsstandard an das Kommunikationsmodul 34 weitergeleitet, genauer gesagt an das FPGA-Modul 50 (Schritt R1).

Das FPGA-Modul 50 konvertiert das erhaltene Datensignal basierend auf dem zweiten Referenztaktsignal 64 vom wenigstens einen zweiten Kommunikationsstandard zum wenigstens einen ersten Kommunikationsstandard, wodurch ein konvertiertes Datensignal erzeugt wird (Schritt R2).

Das konvertierte Datensignal wird basierend auf den wenigstens einen ersten Kommunikationsstandard an das Rechenmodul 32 übertragen (Schritt R3).

Wie oben bereits erläutert wird kein separates Taktsignal zwischen dem Kommunikationsmodul 34 und dem Rechenmodul 32 übertragen. Daher führt das Rechenmodul 32, insbesondere der x86 Prozessor 46 eine Taktrückgewinnung durch, um das konvertierte Datensignal weiter zu verarbeiten (Schritt R4).

Das konvertierte Datensignal wird dann basierend auf dem ersten Referenztaktsignal 60 vom Rechenmodul 32, genauer gesagt vom x86 Prozessor verarbeitet, wodurch ein verarbeitetes Datensignal generiert wird (Schritt R5).

Das verarbeitete Datensignal wird dann an wenigstens eines der Drahtlosmodule 36, an den ersten Datenspeicher 40 und/oder an den zweiten Datenspeicher 42 übertragen (Schritt R6).

Das verarbeitete Datensignal kann dementsprechend mittels der Drahtlosmodule 36 an externe Geräte übertragen werden und/oder auf dem ersten Datenspeicher 40 und/oder dem zweiten Datenspeicher 42 gespeichert werden.

Das Rechenmodul 32 des Computersystems 10 also dafür zuständig, Daten zu verarbeiten, weshalb auf dem Rechenmodul 32 der x86 Prozessor 46 vorgesehen ist.

Das Kommunikationsmodul 34 dient mit dem FPGA-Modul 50 als variable Schnittstelle, welche Datensignale derart konvertiert, dass das Rechenmodul 32 mit jeder der I/O-Schnittstellen 16 kommunizieren kann.

Dementsprechend lässt sich das Computersystem 10 auch nachträglich noch leicht auf- bzw. umrüsten. So kann das Rechenmodul 32 ohne großen Aufwand mit leistungsstärkerer Hardware versehen werden. Auch können nachträglich neue I/O-Schnittstellen hinzugefügt werden oder die I/O-Schnittstellen 16 ausgetauscht werden. Das FPGA-Modul 50 muss in diesem Fall einfach neu programmiert werden, um es an die neue Schnittstellenkonfiguration anzupassen.

Das oben beschriebene Computersystem 10 ist also sehr flexible um- bzw. nachrüstbar. Um diese Flexibilität noch erhöhen, kann das Gehäuse 12 wie in Figur 7 gezeigt erweiterbar sein.

Im linken oberen Teil der Figur 7 ist das oben beschriebene Computersystem 10 in einem Querschnitt gezeigt. Das Gehäuse 12 weist an einer den Kühlrippen 30 gegenüberliegenden Seite einen Deckel 66 auf, der zerstörungsfrei lösbar mit dem Gehäuse verbunden ist, insbesondere verschraubt.

Um das Gehäuse 12 zu erweitern, kann der Deckel 66 abgenommen und ein Erweiterungsmodul 68 auf das Gehäuse 12 aufgesetzt werden.

Das Erweiterungsmodul 68 kann prinzipiell eine beliebige Höhe aufweisen. Beispielsweise hat das Erweiterungsmodul 68 zwischen 25 und 75 Prozent der Höhe des Gehäuses 12, insbesondere 50 Prozent der Höhe des Gehäuses 12.

Das Erweiterungsmodul wird 68 wird mittels geeigneter Befestigungsmittel mit dem Gehäuse 12 verbunden, insbesondere mittels Schrauben 70 und/oder Fixierstiften 72.

Der Deckel 66 wird dann auf das Erweiterungsmodul 68 aufgesetzt und mit diesem verbunden, insbesondere verschraubt.

## Patentansprüche

1. Computersystem, mit einem Rechenmodul (32), einem Kommunikationsmodul (34) und wenigstens einer I/O-Schnittstelle (16), wobei
das Rechenmodul (32) ein COM Express Modul (44) und/oder ein COM HPC Modul umfasst,
das Kommunikationsmodul (34) ein SMARC Modul (48) und/oder ein Qseven Modul umfasst,
das Kommunikationsmodul (34) ein FPGA-Modul (50) aufweist, das signalübertragend mit dem Rechenmodul (32) und mit der wenigstens einen I/O-Schnittstelle (16) verbunden ist,
das FPGA-Modul (50) dazu eingerichtet ist, basierend auf wenigstens einem ersten Kommunikationsstandard mit dem Rechenmodul (32) zu kommunizieren und basierend auf wenigstens einem zweiten Kommunikationsstandard mit der wenigstens einen I/O-Schnittstelle (16) zu kommunizieren, und
das FPGA-Modul (50) dazu eingerichtet ist, Signale vom wenigstens einen ersten Kommunikationsstandard zum wenigstens einen zweiten Kommunikationsstandard zu konvertieren und umgekehrt.

2. Computersystem nach Anspruch 1, **dadurch gekennzeichnet, dass** das Rechenmodul (32) und das Kommunikationsmodul (34) jeweils auf einem separaten Baseboard vorgesehen sind oder dass das Rechenmodul (32) und das Kommunikationsmodul (34) auf einem gemeinsamen Baseboard vorgesehen sind.

3. Computersystem nach einem der vorhergehenden Ansprüche, **dadurch gekennzeichnet, dass** der wenigstens eine erste Kommunikationsstandard PCI, PCI Express, SPI und/oder USB umfasst.

4. Computersystem nach einem der vorhergehenden Ansprüche, **dadurch gekennzeichnet, dass** der wenigstens eine zweite Kommunikationsstandard dazu eingerichtet ist, Kommunikation mit einer m.2-Schnittstelle, einer Ethernet-Schnittstelle (20), einer RS232-Schnittstelle (22), einer RS422-Schnittstelle (22), einer RS485-Schnittstelle (22), einem binären Ein/-Ausgang, einem Odometer, einer UART-Schnittstelle, einer CAN-Schnittstelle und/oder einer EtherCAT-Schnittstelle zu ermöglichen und/oder basierend auf I2C zu kommunizieren.

5. Computersystem nach einem der vorhergehenden Ansprüche, **dadurch gekennzeichnet, dass** wenigstens zwei I/O-Schnittstellen (16) vorgesehen sind, die basierend auf unterschiedlichen zweiten Kommunikationsstandards mit dem FPGA-Modul (50) kommunizieren.

6. Computersystem nach einem der vorhergehenden Ansprüche, **dadurch gekennzeichnet, dass** das Rechenmodul (32) einen x86-Prozessor (46) aufweist.

7. Computersystem nach einem der vorhergehenden Ansprüche, **dadurch gekennzeichnet, dass** das Kommunikationsmodul (34) einen ARM- und/oder x86-Prozessor (52) aufweist, insbesondere wobei der Prozessor (52) mit einer Ethernet-Schnittstelle (20) und/oder mit einer USB-Schnittstelle (24) verbunden ist.

8. Computersystem nach einem der vorhergehenden Ansprüche, **dadurch gekennzeichnet, dass** das Computersystem (10) wenigstens ein Drahtlosmodul (36) aufweist, das dazu eingerichtet ist, drahtlos zu kommunizieren, wobei das Rechenmodul (32) mit dem wenigstens einem Drahtlosmodul (36) signalübertragend verbunden ist, insbesondere unmittelbar verbunden.

9. Computersystem nach einem der vorhergehenden Ansprüche, **dadurch gekennzeichnet, dass** das Computersystem (10) wenigstens einen Datenspeicher (40, 42) aufweist, wobei das Rechenmodul (32) mit dem wenigstens einen Datenspeicher (40, 42) verbunden ist, insbesondere unmittelbar verbunden ist.

10. Computersystem nach einem der vorhergehenden Ansprüche, **dadurch gekennzeichnet, dass** das Rechenmodul (32) und/oder das Kommunikationsmodul (34) wärmeleitend mit einem Gehäuse (12) des Computersystems (10) verbunden sind bzw. ist.

11. Computersystem nach einem der vorhergehenden Ansprüche, **dadurch gekennzeichnet, dass** das Rechenmodul (32) als Host und das Kommunikationsmodul (34) als Client eingerichtet ist.

12. Verfahren zum Betreiben eines Computersystems, insbesondere eines Computersystems (10) nach einem der vorhergehenden Ansprüche, wobei das Computersystem (10) ein Rechenmodul (32), ein Kommunikationsmodul (34) und wenigstens eine I/O-Schnittstelle (16) aufweist, wobei das Rechenmodul (32) ein COM Express Modul (44) und/oder ein COM HPC Modul umfasst, wobei das Kommunikationsmodul (34) ein SMARC Modul (48) und/oder ein Qseven Modul umfasst, wobei das Kommunikationsmodul (34) ein FPGA-Modul (50) aufweist, das signalübertragend mit dem Rechenmodul (32) und mit der wenigstens einen I/O-Schnittstelle (16) verbunden ist, wobei das FPGA-Modul (50) dazu eingerichtet ist, basierend auf wenigstens einem ersten Kommunikationsstandard mit dem Rechenmodul (32) zu kommunizieren und basierend auf wenigstens einem zweiten Kommunikationsstandard mit der wenigstens einen I/O-Schnittstelle (16) zu kommunizieren, insbesondere wobei das Rechenmodul (32) als Host und das Kommunikationsmodul (34) als Client eingerichtet ist, mit den folgenden Schritten:
- Generieren von wenigstens einem Datensignal mittels des Rechenmoduls (32) basierend auf dem wenigstens einen ersten Kommunikationsstandard und/oder Empfangen von wenigstens einem Datensignal mittels der wenigstens einen I/O-Schnittstelle (16) basierend auf dem wenigstens einen zweiten Kommunikationsstandard;
- Übertragen des wenigstens einen Datensignals an das Kommunikationsmodul (34); und
- Konvertieren des Datensignals vom wenigstens einen ersten Kommunikationsstandard zum wenigstens einen zweiten Kommunikationsstandard bzw. vom wenigstens einen zweiten Kommunikationsstandard zum wenigstens einen ersten Kommunikationsstandard mittels des FPGA-Moduls (50), wodurch ein konvertiertes Datensignal erzeugt wird.

13. Verfahren nach Anspruch 12, **dadurch gekennzeichnet, dass** das konvertierte Datensignal zur wenigstens einen I/O-Schnittstelle (16) bzw. zum Rechenmodul (32) übertragen wird.

14. Verfahren nach Anspruch 12 oder 13, **dadurch gekennzeichnet, dass** das Datensignal zwischen dem Rechenmodul (32) und dem Kommunikationsmodul (34) mittels PCI Express übertragen wird.

15. Verfahren nach Anspruch 14, **dadurch gekennzeichnet, dass** das Rechenmodul (32) und das Kommunikationsmodul (34) jeweils ein eigenes Referenztaktsignal erzeugen, auf dem basierend sie jeweils Daten verarbeiten.

16. Verfahren nach Anspruch 15, **dadurch gekennzeichnet, dass** kein separates Taktsignal zwischen dem Rechenmodul (32) und dem Kommunikationsmodul (34) übertragen wird.
